Europäisches Patentamt

European Patent Office

Office européen des brevets

(19)

(11)  EP 0 673 889 B1

(12)  **EUROPÄISCHE PATENTSCHRIFT**

(45) Veröffentlichungstag und Bekanntmachung des Hinweises auf die Patenterteilung:
**02.06.1999  Patentblatt 1999/22**

(51) Int Cl.6: **C03B 29/02**

(21) Anmeldenummer: **94104511.4**

(22) Anmeldetag: **22.03.1994**

(54) **Verfahren und Vorrichtung zum Rückerwärmen von Glasposten**

Method and apparatus for re-heating glass parisons

Procédé et appareil pour le réchauffage de paraisons en verre

(84) Benannte Vertragsstaaten:
**AT DE FR GB SE**

(43) Veröffentlichungstag der Anmeldung:
**27.09.1995  Patentblatt 1995/39**

(73) Patentinhaber: **AGA AKTIEBOLAG**
**181 81 Lidingö (SE)**

(72) Erfinder: **Petrick, Gotthard**
**D-02943 Weisswasser (DE)**

(74) Vertreter: **Glawe, Delfs, Moll & Partner**
**Patentanwälte**
**Liebherrstrasse 20**
**80538 München (DE)**

(56) Entgegenhaltungen:
**DE-C- 594 615          GB-A- 121 100**
**US-A- 2 074 974**

## Beschreibung

Bei der plastischen Verarbeitung von Glasartikeln, insbesondere an der Glasbläserpfeife, kann es erforderlich sein, den Posten oder das Külbel nach zu starker Abkühlung erneut aufzuwärmen (rückerwärmen). Man bedient sich dazu im Stand der Technik der sogenannten Rückerwärmtrommel. Dies ist ein hohlzylindrischer, an einer Stirnwand offener Körper, der mit einem Gasbrenner und einer wärmebeständigen Ausmauerung versehen ist. Der durch die offene Stirnseite bspw. an der Pfeife in die Trommel gesenkte Posten wird von dem Heißgas umspült, das von einem Gas-Luft-Brenner erzeugt wird. Damit die Rückerwärmtrommel sich ständig auf hinreichend hoher Temperatur befindet, wird sie ständig beheizt, was einen entsprechend hohen Gasverbrauch zur Folge hat. Der Abgasanfall ist hoch.

Diese Nachteile vermeidet die Erfindung mittels einer Rückerwärmtrommel, deren Auskleidung eine Wärmeeindringzahl $\sqrt{\lambda c p}$ von nicht mehr als 20, vorzugsweise 15, weiter vorzugsweise 10 bei 1000°C aufweist. Dies ermöglicht es, die Oberfläche der Auskleidung sehr rasch aufzuheizen, so daß ein diskontinuierliches Betriebsverfahren möglich ist, bei welchem die Oberfläche auf eine Temperatur von mindestens etwa 1500°C, vorzugsweise etwa 1700°C aufgeheizt wird. Dafür verwendet man zweckmäßigerweise ein energiereiches Brenngasgemisch wie Gas-Sauerstoff.

Die Aufheizung der Innenoberfläche der Rückerwärmtrommel auf den angegebenen Betrag, vorzugsweise mit Verwendung eines energiereichen Brenngasgemischs wie Gas-Sauerstoff, ist insofern überraschend, als derart hohe Temperaturen für die Erwärmung des Glasartikels nach bisheriger Vorstellung weder erforderlich noch vorteilhaft sind. Danach führt nämlich eine Temperaturerhöhung des Gases infolge der begrenzten Wärmeleitfähigkeit des Glasmaterials lediglich zu einer stärkeren Erwärmung und ggf. zu einer nachteiligen Überheizung der oberflächennahen Bereiche. an hält deshalb bislang die "schonende" Erwärmung nach den bisherigen Verfahren für angemessener. Diese Auffassung ist in der Tat zutreffend für die bisherige Erwärmung des Glaspostens hauptsächlich durch Wärmeübertragung von dem ihn umspülenden Gas. Jedoch wird durch die Erfindung als besonderer Effekt erreicht, daß zusätzlich zu der Wärmeübertragung von dem Gas die Wärmestrahlung von der umgebenden Wand einen erheblichen Erwärmungsanteil leistet. Diese Wärmestrahlung ist in der Lage, auch tiefere Zonen des Glaspostens zu erreichen. Dadurch wird die Rückerwärmdauer verringert, ohne daß die Glasoberfläche überhitzt wird.

Durch die erfindungsgemäße Wahl einer Auskleidung mit niedriger Wärmeeindringzahl wird erreicht, daß die Oberfläche der Auskleidung sehr kurzfristig die erstrebte hohe Temperatur erreicht. Dies ermöglicht einen diskontinuierlichen Betrieb, bei dem das Gerät jeweils nur bei Bedarf eingeschaltet wird, und damit eine beträchtliche Herabsetzung des Gasverbrauchs und der ausgestoßenen Abgasmengen. Ein geeignetes Auskleidungsmaterial ist bspw. ein Mineralfasermaterial, das vorzugsweise eine filzige Struktur aufweist.

Nach einer bevorzugten Ausführung der Erfindung ist der Brenngaseinlaß in die Rückerwärmtrommel tangential angeordnet. Dadurch wird erreicht, daß die Innenoberfläche der Trommel gleichmäßig bespült wird, obwohl die Heißgasmenge aufgrund der Verwendung eines energiereicheren Brenngasgemischs im Vergleich mit dem Stand der Technik beträchtlich reduziert ist. Die rasch kreisende Brenngasströmung liegt an der Auskleidungsoberfläche stabil an, während langsamere Gasanteile abgedrängt werden. Auch ergibt diese Gasführung eine gute und gleichmäßige Umspülung des Glaspostens.

Die Erfindung wird im folgenden unter Bezugnahme auf die Zeichnung erläutert, die ein vorteilhaftes Ausführungsbeispiel veranschaulicht. Es zeigen:

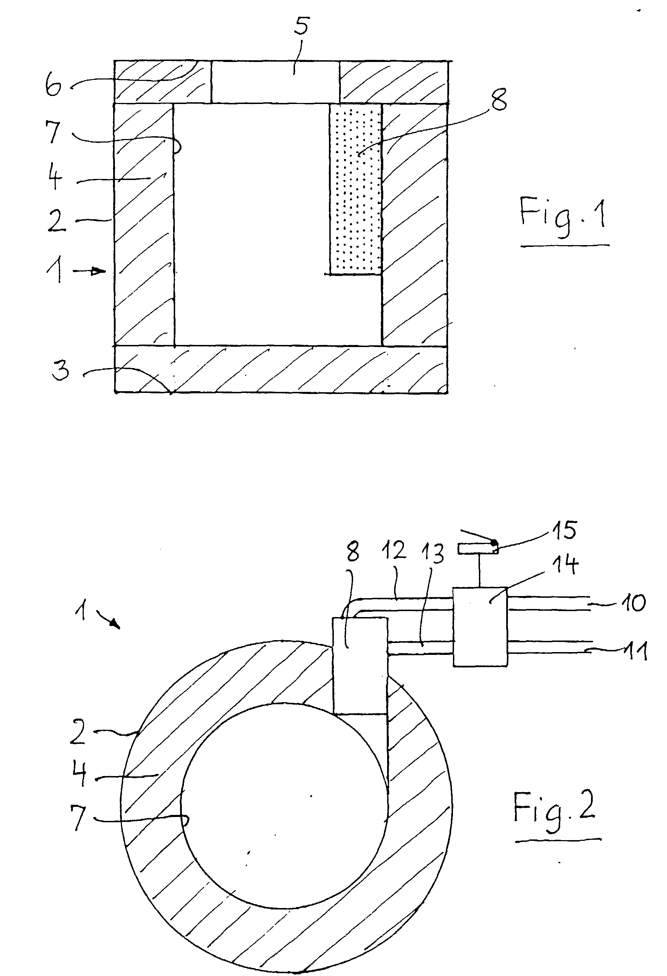

Fig. 1    einen Längsschnitt und

Fig. 2    einen Querschnitt durch die Rückerwärmtrommel mit schematisch angedeuteten Steuergeräten.

Wie man den Zeichnungen entnimmt, ist die Rückerwärmtrommel 1 ein topfartiges Gebilde mit zylindrischen Seitenwänden 2, einer Bodenwand 3 und einer Deckwand 6, die mit einer mehrere Zentimeter dicken Auskleidung 4 aus Isoliermaterial versehen sind. Die Deckwand 6 enthält eine Öffnung 5, deren Durchmesser in dem dargestellten Beispiel etwas kleiner ist als der des Innenumfangs 7. Die Deckwand 6 ist zweckmäßigerweise auswechselbar, damit unterschiedliche Öffnungsgrößen entsprechend dem Raumbedarf des Glaspostens gewählt werden können. Je kleiner der Durchmesser ist, umso geringer ist der Wärmeverlust.

Im Innenumfang 7 der Seitenwand-Auskleidung 4 mündet ein Gasbrenner 8, dessen Verbrennungsgase etwa tangential in den Innenraum der Rückerwärmtrommel einströmen und auf einem schraubenförmigen Weg entlang der Auskleidungsinnenoberfläche 7 zur Auslaßöffnung 5 strömen.

Die Auskleidung 4 besteht aus einem Mineralfaserfilz hinreichender Temperaturbeständigkeit. Die Fasern bestehen bspw. aus Aluminiumoxid. Bewährt hat sich beispielsweise der von der Firma Aug. Rath jun., Wien, unter der Bezeichnung KVS 181/400 erhältliche Werkstoff. Im Temperaturbereich zwischen 800°C und 1600°C liegt die Wärmeleitzahl $\lambda$ zwischen 0,19 und 0,43 W/mK. Die spezifische Wärme c liegt bei 1,1 kJ/kgK und die Dichte $\rho$ bei 400 kg/m³. Die Wärmeeindringzahl liegt daher wesentlich niedriger als die von herkömmlichen Ausmauerungen. Dies gilt insbesondere für niedrigere Temperaturbereiche, die für die Erfindung im Hinblick auf kurze Aufheizzeit von Bedeutung sind.

Der Brenner 8 wird durch die Leitungen 10,11 und 12,13 über ein Steuergerät 14 mit Erdgas und Sauerstoff gespeist, sobald ein Fußpedal 15 getreten wird. Das Steuergerät 14 bestimmt Menge und Mengenverhältnis. Bei Verwendung einer Rückerwärmtrommel mit einem Innendurchmesser von 15 bis 40 cm wird der Brenner dann bspw. mit einer Leistung von 50 bis 100 kW betrieben. Dies führt zu einer Aufheizung der Rückerwärmtrommel (genauer: der Innenoberfläche 7 der Auskleidung 4) in 10 bis 20 Sekunden auf Weißglut (Temperatur ca. 1720°C). Bei größeren bzw. kleineren Trommeldurchmessern sind entsprechend größere bzw. kleinere Wärmeleistungen anzusetzen. Sobald der jeweilige Rückerwärmvorgang beendet ist, wird die Gaszufuhr mittels des Pedals 15 wieder abgeschaltet.

Es hat sich gezeigt, daß erfindungsgemäß ausgeführte Rückerwärmtrommeln im Innendurchmesser kleiner als herkömmliche ausgeführt werden können. Dies liegt daran, daß bei herkömmlichen Trommeln zur Erzielung der erforderlichen Rückerwärmleistung ein wesentlich größeres Heißgasvolumen durchzusetzen ist als bei den erfindungsgemäßen und daß mit Rücksicht auf eine etwaige Beeinflussung der Form des Glasartikels innerhalb der Rückerwärmtrommel keine zu hohen Gasgeschwindigkeiten auftreten sollen.

**Patentansprüche**

1. Vorrichtung zum Rückerwärmen von Glasposten, die eine Rückerwärmtrommel (1) mit wärmeisolierender Auskleidung (4) und einen Gasbrenner (8) umfaßt, dadurch gekennzeichnet, daß die Auskleidung (4) eine Wärmeeindringzahl $\sqrt{\lambda c \rho}$ von nicht mehr als 20

$$\frac{W\sqrt{sec}}{m^2 K}$$

bei 1000°C aufweist.

2. Vorrichtung nach Anspruch 1, dadurch gekennzeichnet, daß die Auskleidung (4) von Mineralfasermaterial gebildet ist.

3. Vorrichtung nach Anspruch 1 oder 2, dadurch gekennzeichnet, daß der Brenner (8) für ein energiereiches Gasgemisch wie Erdgas-Sauerstoff eingerichtet ist.

4. Vorrichtung nach einem der Ansprüche 1 bis 3, dadurch gekennzeichnet, daß der Brenngaseinlaß in die Rückerwärmtrommel (1) tangential angeordnet ist.

5. Vorrichtung nach einem der Ansprüche 1 bis 4, dadurch gekennzeichnet, daß die Leistung des Gasbrenners (8) so bemessen ist, daß die Oberfläche (7) der Auskleidung (4) innerhalb weniger Sekunden von Umgebungstemperatur auf Weißglut erwärmt wird.

6. Vorrichtung nach einem der Ansprüche 1 bis 5, dadurch gekennzeichnet, daß sie mit einem Steuergerät (14,15) für diskontinuierlichen Betrieb ausgestattet ist.

7. Verfahren zum Rückerwärmen von Glasposten mittels einer Rückerwärmtrommel, die eine Einrichtung für die Zufuhr von den Glasposten umspülendem Heißgas und eine wärmeisolierende Auskleidung aufweist, dadurch gekennzeichnet, daß eine Auskleidung mit einer Wärmeeindringzahl $\sqrt{\lambda c \rho}$ von nicht mehr als 20

$$\frac{W\sqrt{sec}}{m^2 K}$$

bei 1000°C verwendet wird und deren Oberfläche diskontinuierlich auf eine Temperatur von mindestens etwa 1500°C aufgeheizt wird.

8. Verfahren nach Anspruch 7, dadurch gekennzeichnet, daß in der Einrichtung für die Zufuhr von Heißgas ein energiereiches Brenngasgemisch wie Erdgas-Sauerstoff verwendet wird.

**Claims**

1. An apparatus for reheating parisons, which comprises a reheating drum (1) with a heat-insulating lining (4) and a gas burner (8), characterised in that the lining (4) has a heat penetration coefficient $\sqrt{\lambda c \rho}$ of not more than 20

$$\frac{W\sqrt{sec}}{m^2 K}$$

at 1000°C.

2. An apparatus according to Claim 1, characterised in that the lining (4) is formed from mineral fibre material.

3. An apparatus according to Claim 1 or 2, characterised in that the burner (8) is set up for a high-energy gas mixture, such as natural gas-oxygen.

4. An apparatus according to any one of Claims 1 to 3, characterised in that the fuel gas inlet is disposed tangentially in the reheating drum (1).

5. An apparatus according to any one of Claims 1 to 4, characterised in that the output of the gas burner (8) is calculated so that the surface (7) of the lining (4) is heated from ambient temperature to white heat within a few seconds.

6. An apparatus according to any one of Claims 1 to 5, characterised in that it is provided with a control unit (14,15) for discontinuous operation.

7. A method of reheating parisons by means of a reheating drum which has a device for supplying hot gas flowing around the parisons and a heat-insulating lining, characterised in that a lining is used having a heat penetration coefficient $\sqrt{\lambda c \rho}$ of not more than 20

$$\frac{W\sqrt{sec}}{m^2 K}$$

at 1000°C and its surface is heated discontinuously to a temperature of at least approximately 1500°C.

8. A method according to Claim 7, characterised in that a high-energy fuel gas mixture, such as natural gas-oxygen, is used in the device for supplying hot gas.

## Revendications

1. Dispositif pour le réchauffage de paraisons de verre, qui comprend un tambour de réchauffage (1) avec revêtement (4) d'isolation thermique et un brûleur à gaz (8), caractérisé en ce que le revêtement (4) présente un indice de pénétration de la chaleur $\sqrt{\lambda cp}$ non supérieur à 20

$$\frac{w\sqrt{sec}}{m^2 k}$$

à 1 000 °C.

2. Dispositif selon la revendication 1, caractérisé en ce que le revêtement (4) est constitué d'un matériau à fibres minérales.

3. Dispositif selon la revendication 1 ou 2, caractérisé en ce que le brûleur (8) est aménagé pour un mélange de gaz à haute énergie, tel que qu'un mélange de gaz naturel et d'oxygène.

4. Dispositif selon l'une des revendications 1 à 3, caractérisé en ce que l'entrée de gaz de combustion dans le tambour de réchauffage (1) est disposée tangentiellement.

5. Dispositif selon l'une des revendications 1 à 4, caractérisé en ce que la puissance du brûleur à gaz (8) est telle que la surface (7) du revêtement (4) soit portée en quelques secondes de la température ambiante à l'incandescence.

6. Dispositif selon l'une des revendications 1 à 5, caractérisé en ce qu'il est équipé d'un appareil de commande (14, 15) pour fonctionnement discontinu.

7. Procédé de réchauffage de paraisons de verre au moyen d'un tambour de réchauffage, qui comporte un dispositif pour amener du gaz chaud autour des paraisons de verre ainsi qu'un revêtement d'isolation thermique, caractérisé en ce qu'on utilise un revêtement présentant un indice de pénétration de la chaleur $\sqrt{\lambda cp}$ non supérieur à 20

$$\frac{w\sqrt{sec}}{m^2 k}$$

à 1 000 °C et dont la surface est chauffée de manière discontinue à une température d'au moins 1 500 °C environ.

8. Procédé selon la revendication 7, caractérisé en ce que dans le dispositif d'amenée de gaz chaud on utilise un mélange de gaz de combustion à haute énergie, tel qu'un mélange de gaz naturel et d'oxygène.

Fig.1

Fig.2